Europäisches Patentamt

European Patent Office

Office européen des brevets

(11) Publication number: **0 011 503**
**B2**

(12) NEW EUROPEAN PATENT SPECIFICATION

(45) Date of publication of the new patent specification: **07.12.88**

(51) Int. Cl.⁴: **H 02 P 5/40,** D 06 F 37/36, G 05 D 13/62

(21) Application number: **79302605.5**

(22) Date of filing: **16.11.79**

(54) Device for controlling the speed of a washing machine motor.

(30) Priority: **21.11.78 IT 6965078**

(43) Date of publication of application:
**28.05.80 Bulletin 80/11**

(45) Publication of the grant of the patent:
**22.02.84 Bulletin 84/08**

(45) Mention of the opposition decision:
**07.12.88 Bulletin 88/49**

(84) Designated Contracting States:
**AT BE DE FR GB NL**

(56) References cited:
CH-A- 599 382
DE-A-1 965 085
DE-A-2 546 478
DE-A-2 704 111
DE-A-2 715 561
DE-B-1 060 166
DE-B-1 161 366
DE-B-1 224 071
DE-B-1 585 731
FR-A-2 055 886
US-A-3 511 411

FUNKSCHAU, vol. 43, 2nd April 1971, München
8000 BRD DE Ing. OTTO LIMANN "Haushalt-
Elektronik", pages 210, 213, 214

(73) Proprietor: **INDESIT INDUSTRIA
ELETTRODOMESTICI ITALIANA S.p.A.**
**Str. Piossasco Km 17**
**I-10040 Rivalta Turin (IT)**

(72) Inventor: **Galeotti, Massimo**
**Via Nizza 113**
**Torino (IT)**
Inventor: **Bertagni, Quirino**
**Via Puccini 3**
**Piossasco (Torino) (IT)**
Inventor: **Fancelli, Fabio**
**Via Torino 85**
**Moncalieri (Torino) (IT)**

(74) Representative: **Robinson, John Stuart et al
MARKS & CLERK 57/60 Lincoln's Inn Fields
London WC2A 3LS (GB)**

(56) References cited:
"Industrie-Elektrik Elektrowelt", zweite
Februarausgabe 1962, B4, pages 53-58

O. Limann: "Funktechnik ohne Ballast", Franzis-
Verlag 1967, pages 292-293, 304-305

E. Gelder et al.: "Schaltungen mit
Halbleiterbauelementen", Band 1, Siemens &
Halske AG 1964, pages 168-169, 303-304

E. Gelder et al.: "Schaltungen mit
Halbleiterbauelementen", Band 3, Siemens AG,
1967, pages 287-292

Courier Press, Leamington Spa, England.

## Description

The present invention relates to a device for controlling the speed of a washing machine motor.

The motor speed controllers currently being fitted on washing machines are of the solid state type and have a number of advantages over traditional electromechanical designs. One of the most outstanding of these advantages is the versatility they afford as regards the functions that can be performed. Thanks to the introduction of solid-state controllers, machines can be made to perform a number of functions which were simply unobtainable at one time. One of the many functions a washing machine is called upon to perform is spinning at the end of the washing operation. This spinning operation is performed on known machines in a variety of different ways. Some perform only one type of spinning operation at a single speed regardless of the type of load being washed. Others spin at variable speeds or with two independent spinning cycles — low speed (about 400 revs/min of the drum) and high speed (about 800 revs/min) — actuated one after the other by the timer on the machine. In the case of the latter system, the load is practically dry after high-speed spinning. Nevertheless, for best spinning results, provision should be made for adjusting the speed of both the high-speed and low-speed operation to the type of load being washed. Depending on the thickness of the items being washed, spinning speed should be neither too high (to avoid creasing) nor too low (to prevent the load still being wet after spinning). It is also important to be able to adjust both speeds during both spinning cycles (high and low speed) as creasing also depends on how fast the low-speed spinning operation is performed. Adjustment of both spinning speeds must therefore be left to the user of the machine and made as simple as possible.

West German Patent No. 2,715,561 discloses an arrangement in which high and low speeds are controllable separately and independently of each other. However, such an arrangement is relatively complicated for a user to use correctly. The aim of the present invention is therefore to enable adjustments to be made to washing machine motor speeds for high and low-speed spinning operations. A further aim of the present invention is to enable both speeds to be adjusted simply and cheaply.

According to the invention, there is provided a device for controlling the speed of a washing machine motor during the execution of a single washing programme, comprising a regulating element for regulating the speed of the motor in dependence upon a control signal, a circuit for generating the control signal, the latter circuit including a reference signal generating circuit, opertiave to generate a first or second type of signal in order to run the motor at a speed within an acceptable first and second ranges and control means for continuous adjustment of the said first and second type of reference signal so as to provide for continuous control of motor speed within each of the first and second acceptable ranges, characterised in that there is provided a single manually operable means for controlling the said control means to regulate both the first and second speed by means of a single operation in order to obtain a fixed and predetermined ratio between both the first and second speed during the execution of a single washing programme, throughout the range of continuous adjustment of the control means.

A detailed description will now be given with reference to the attached drawings, provided by way of a non-limiting example, in which:

Figure 1 shows the block diagram of one possible application of the washing machine motor speed controller according to the present invention;

Figure 2 shows a possible circuit arrangement of certain parts of the device shown in Figure 1.

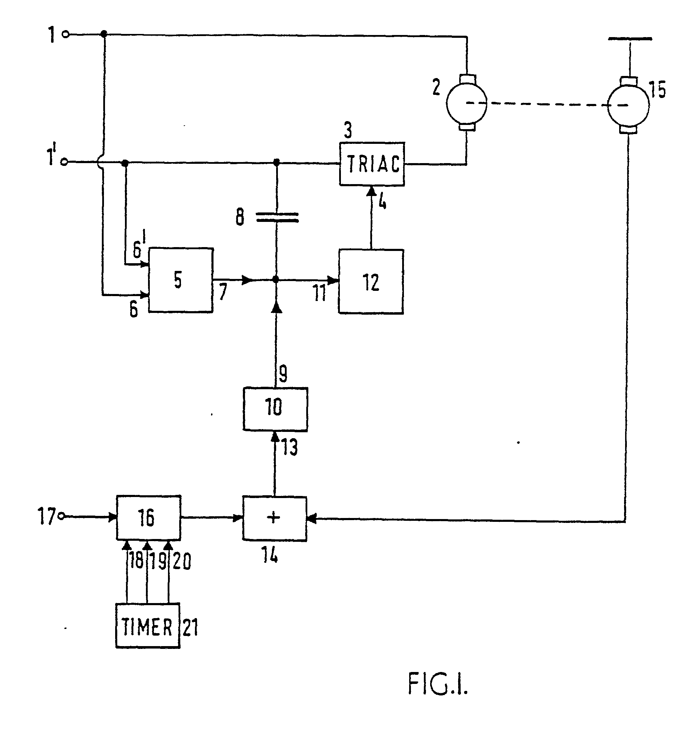

Figure 1 shows the speed controller according to the present invention with reference also to the main parts on the washing machine. Terminals 1-1' are supplied with the a.c. mains voltage supplied to motor 2 which controls rotation of the drum on the machine via regulator 3 of the solid-state type using a triac. Regulator 3 also receives at its control input 4 a control signal consisting in a suitable trigger current supplied to the triac gate by which it is either disabled or allowed to conduct. The frequency of this control signal is higher than that of the a.c. mains voltage so that the control made is commonly referred to as phase angle control.

In the Figure 1 circuit, the control signal at terminal 4 is generated by a zero cross detecting circuit 5 which receives the a.c. mains voltage at its inputs 6-6' and produces a signal at its output 7 whenever the mains voltage crosses the zero. This output 7 signal is supplied to capacitor 8 which also receives a reference signal from output of an amplifier 10. The resulting signal at the capacitor terminals is supplied to the input terminal 11 of pulse-forming circuit 12 which generates signal 4 for triggering the triac in regulator 3.

Input 13 of amplifier 10 receives a signal from an adding circuit 14 which makes an algebraic addition of all incoming signals, on the one hand, from tachometer dynamo 15, connected to motor 2 and, on the other, from reference voltage generator 16. Terminal 17 on generator 16 is the terminal which receives the control signal imparted by the user via a single control provided for adjusting motor speed as required during high and low-speed spinning. Generator 16 has another three input terminals 18, 19 and 20 connected to three output terminals of a timer 21 via which switch signals are supplied to generator 16 depending on how the machine's washing programme is progressing.

The circuit described operates as follows:

When terminals 1-1' are supplied with mains voltage (this occurs during the wash programme when it is necessary to start rotating the drum or start up motor 2), the motor speed controller is enabled to operate. The mains voltage at the input of zero cross detecting circuit 5 produces fixed-length pulses at its output 7 which are sent to discharge periodically the capacitor 8 which is constantly charged at the other end by the signal from amplifier 10. Depending on the level of the signal from amplifier 10, the time necessary for charging condenser 8 to a given level varies so that pulse formation circuit 12, consisting, for example, of a threshold circuit, produces pulses with a variable phase delay as compared with zero crossing. The longer it takes to charge capacitor 8. the longer pulse-formation circuit 12 will take t, produce the trigger signal at its output. In this way, the triac in regulator 3 will conduct for a greater or lesser period during each half cycle depending on the delay with which it is supplied with trigger pulses from pulse formation circuit 12. Consequently, the longer the triac conducts, the greater the speed of the motor will be. The function of the tachometer dynamo associated with adding circuit 14 and reference voltage generator 16 is to create a feedback loop for stabilizing and fixing the speed of the motor according to the reference voltage value. The speed of the motor can therefore be adjusted by regulating the value of the reference voltage. On the Figure 1 circuit, the reference voltages at the output of generator 16 can be regulated via timer 21 depending on which stage of the wash programme is being performed by the machine or, for spinning purposes only, by the user for regulating rotation speed according to the type of load being washed.

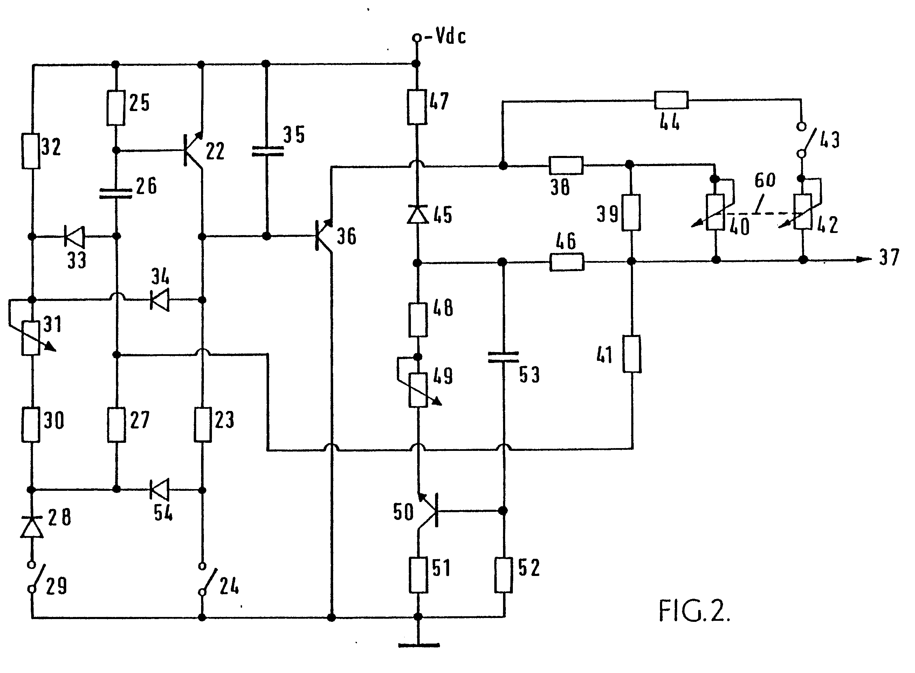

Reference voltage generator 16 is designed so that both rotation speeds can be adjusted by means of a single control connected to terminal 17 and depending on whether timer 21 supplies generator 16 with an enabling signal for operating at high or low-speed spinning rates. The direction in which the required adjustment is made for both speeds is the same in both cases; if a speed reduction is needed for slow-spinning operation, the same reduction, must be made to the fast-spinning operation speed. How this twin adjustment can be made using a single control 17 will now be explained with reference to Figure 2 which shows a practical application of reference voltage generator 16 shown in Figure 1.

In Figure 2, $-V_{dc}$ indicates a d.c. current supply terminal. To this is connected the emitter of an NPN transistor 22 which has its collector grounded via a resistor 23 and switch 24 connected in series with one another. The base of transistor 22 is connected to terminal $-V_{dc}$ via resistor 25 and to ground via a capacitor 26, resistor 27, diode 28 and switch 29 connected in series with one another. Switch 24 is also connected to the anode of diode 54 the cathode of which is connected to the cathode of diode 28. The anode of diode 28 is connected to switch 29 while its cathode is also connected to terminal $-V_{dc}$ via resistor 30, variable resistor 31 and resistor 32, connected in series. To the intersection of resistor 32 and resistor 31 is connected the cathode of diode 33 the anode of which is connected to the intersection of condenser 26 and resistor 27. The cathode of diode 33 is also connected to the cathode of diode 34 which has its anode connected to the collector of transistor 22. The collector of transistor 22 is also connected, at one end. to terminal $-V_{dc}$, via capacitor 35, and, at the other, to the base of NPN transistor 36. The collector of transistor 36 is grounded directly while the emitter is connected to output terminal 37 via two resistors, connected in series, and indicated by numbers 38 and 39. A variable resistor 40 is connected parallel to resistor 39. Output terminal 37 is also connected at one point to the anode of diode 33 via resistor 41, at another to the emitter of transistor 36 via the series connection of variable resistor 42, switch 43 and resistor 44 and, at another, to the anode of diode 45 via resistor 46. Diode 45 has its cathode connected to terminal $-V_{dc}$ via resistor 47 and its anode grounded via the series connection of resistor 48, variable resistor 49, the emitter-collector section of NPN transistor 50 and resistor 51. The base of transistor 50 is grounded via resistor 52 and connected to the anode of diode 45 via capacitor 53. It is to be noted also that the slides of variable resistors 40 and 42 are ganged so that the resistance variations of both resistors agree (in this case, in fact, they are the same in that the maximum ratings of both resistors are the same).

The operation of the device described is as follows: The three switches 29, 24 and 43 receive the three control signals 18, 19 and 20 shown in Figure 1 for running the motor at different speeds depending on the washing stage the machine is performing. When switch 29 is closed, this actuates the so-called "distribution" phase in which the washing is distributed evenly round the edge of the drum by rotating at a speed, for example, of 75 revs/minute. Closing of switch 24 actuates the low-speed spinning operation (e.g. 300 revs/minute). If, in addition to this, switch 43 is also closed, this actuates the high-speed spinning operation (e.g. 600 revs/minute).

Now let us examine how, during these three stages, the Figure 2 device generates the different reference voltages required for running the motor at the most suitable speed for the stage in question. Before switch 29 is closed, the device is already in a position to supply a reference voltage. At this point, the circuit consisting of transistor 50 and its associated components is supplied and a voltage is available at output terminal 37 mainly dependent on the voltage divider consisting of resistors 47, 48, 49 and 51 and the drop across resistor 46. In fact, transistor 50 is saturated while all the other active components on the device are disabled. The function of capacitor 53 is to hold up supply voltage $-V_{dc}$ so as to enable the motor to reach the required running speed gradually and prevent it from starting up at too high a speed. Under these operating conditions, the reference voltage at terminal 37 is such as to run the motor at the "wash" stage speed. When switching to the distribution stage, switch 29 is closed by timer 21 and voltage produced slowly, as a result of the delaying action of capacitor 26, at the anode of diode 33 from which it is supplied to terminal 37 via resistor 41. This voltage is added to the existing wash stage voltage so as to produce the voltage increase needed for increasing the speed of the drum and bringing it up gradually (by means of condenser 26) to distribution stage speed. During this time, transistors 22 and 36 are still disabled owing to diodes 33 and 34 preventing biasing. When timer 21 causes switch 24 to close, transistors 22 and 36 are also supplied so that the reference voltage is further increased at output terminal 37 via the emitter of transistor 36 and the series connection of resistor 38 and resistor 39 connected parallel to variable resistor 40. This further increase in reference voltage brings about the switch to low-speed spinning (maximum speed 400 revs/min). By adjusting variable resistor 40, speed can be adjusted continuously during this stage between 100 and 400 revs/minute. Detailed operation of transistors 22 and 36 and their associated components is as follows: if switch 24 is closed when switch 29 has only been open for a short length of time, capacitor 26 is still charged so that, even if the collector of transistor 22 receives supply voltage, it remains disabled in that, with the capacitor charged, its base receives no biasing current. Under these conditions, transistor 36 is slowly saturated (owing to the charge of capacitor 35) and the voltage generating at the terminals of the emitter is roughly equal to ground voltage. If switch 24 is closed, however, after capacitor 26 has been discharged (e.g. in the case of a return of mains voltage following a power cut during spinning), when the $-V_{dc}$ voltage returns, transistor 22 is instantly saturated so as to disable transistor 36 and prevent the washing operation from taking up from the spinning stage. With transistor 36 disabled, the device generates a reference voltage corresponding to the distribution stage at output 37. Only when capacitor 26 has been charged and transistor 22 disabled will transistor 36 be able to conduct and supply thie voltage needed for producing the reference voltage at the output for running the motor at low-speed spinning speed.

Finally when timer 21 brings about the switch to high-speed spinning, besides switch 24, switch 43 is also closed. In this way, resistors 42 and 44 are brought parallel to resistors 38 and 40 so as to reduce the fall in voltage between the emitter of transistor 36 and output terminal 37 and increase the voltage at output terminal 37. With the component ratings used, the output voltage is such that the maximum rotation speed of the drum is 800 revs/minute.

As already mentioned, owing to the fact that variable resistors 40 and 42 are ganged and thus adjusted equally by means of a single control, both slow and fast-spinning speeds can be adjusted as required using a single control. Further mention should be made of the importance of certain component functions, in particular variable resistors 40 and 42 and resistors 38, 39 and 44. First of all, the resistance value chosen for resistor 39 is the one which determines minimum running speed of the motor during slow-spinning operation. In fact, the only effect the adjustment made via resistor 40 has is to reduce the equivalent fall resistance between the emitter of transistor 36 and the output terminal. The value chosen for resistor 38, on the other hand, determines the maximum running speed of the motor, again during slow spinning operation. The value of resistor 44 determines maximum running speed of the motor during fast-spinning operation while the maximum value of variable resistor 42 must be chosen so that, when it is full on (maximum resistance), its effect is minimum as regards the fall variation caused as compared with slow spinning operation. In this way, the minimum running speed of the motor is practically the same as the minimum slow-spinning speed.

It has been found that it is advisable to seleot the two variable resistors with logarithmic characteristics so that the relationship between adjustment of the slides and motor running speed is more or less linear. The following is a list, provided by way of an example, of the component ratings relative to Figure 2 and used on a working version of the present invention:

Rating Table

22 transistor BC 238 B
23 resistor 39 KΩ
25 resistor 4.7 kΩ
26 capacitor 220 µF
27 resistor 82 KΩ
28 diode BA 750
30 resistor 3.3 KΩ
31 var. res. 2.2 KΩ max
32 resistor 4.7 KΩ
33 diode BA 750
34 diode BA 750
35 capacitor 22 µF
36 transistor BC 238 B
38 resistor 33 KΩ
39 resistor 220 KΩ
40 var. log. res. 470 KΩ max
41 resistor 560 KΩ
42 var. log. res. 470 KΩ max
44 resistor 27 KΩ
45 diode BA 750
46 resistor 6.8 KΩ
47 resistor 1 KΩ
48 resistor 33 KΩ
49 var. res. 10 KΩ max
50 transistor BC 238 B
51 resistor 5.6 KΩ
52 resistor 56 KΩ
53 capacitor 22 µF
54 diode BA 750

The advantages of the present invention will be clear from the description given, in particular the possibility of the user also adjusting slow-spinning speed. A further advantage is the simplicity with which this can be done using a single control for adjusting both slow and fast spinning speeds.

## Claims

1. A device for controlling the speed of a washing machine motor during the execution of a single washing programme, comprising a regulation element (3) for regulating the speed of the motor in dependence upon a control signal, a circuit (16, 21) for generating the control signal, the latter circuit including a reference signal generating circuit (16), operative to generate a first or second type of signal in order to run the motor at a speed within acceptable first and second ranges, and control means (40, 42) for continuous adjustment of the said first and second type of reference signal so as to provide for continuous control of motor speed within each of the first and second acceptable ranges, characterised in that there is provided a single manually operable means (60) for controlling the said control means (40, 42) to regulate both the first and second speed by means of a single operation in order to obtain a fixed and predetermined ratio between both the first and second speed during the execution of a single washing programme throughout the range of continuous adjustment of the control means

2. A device according to Claim 1, characterised in that the reference signal generating circuit (16) is operated to generate reference voltages and that the control means (40, 42) serves to vary the said reference votages to generate a control voltage which, when supplied to the said regulation element, affects the proportion of time during each cycle of the supply voltage during which current is applied to the motor so as to affect the running speed of the said motor.

3. A device according to Claim 1 or 2, characterised in that the said control means comprises two ganged variable resistors (40, 42) for producing two resistance variations by means (60) of a single control operation.

4. A device according to Claim 3, characterised in that the said two variable resistors (40, 42) have the same maximum resistance rating.

5. A device according to Claim 3 characterised in that both of the said variable resistors (40, 42) are logarithmic.

6. A device according to Claim 2, characterised in that the said reference voltage generating circuit (16) includes a voltage source $(-V_{dc})$ which is supplied to the output (37) of the said reference voltage generating circuit *via* at least one variable resistor (40).

7. A device according to Claim 6, characterised in that, between its output (37) and the said voltage source $(-V_{dc})$, the said reference voltage generating oircuit includes a further variable resistor (42) connected by means of a switch (43) when passing from said first-speed to said second-speed operation.

8. A device according to Claim 7, characterised in that the variable resistor (40) and the additional variable resistor (42) are constituted by two ganged variable resistors having mechanically connected slides.

9. A device according to any one of the preceding claims, characterised in that the said reference voltage generating circuit includes delay means (35, 36, 53, 50) for preventing the motor from making sharp speed changes when switching from one operating condition to another.

## Revendications

1. Un dispositif pour commander a vitesse un moteur de machine à laver durant l'exécution d'un programme unique de lavage comprenant un élément de régulation (3) pour réguler la vitesse du moteur en dépendance d'un signal de commande, un circuit (16, 21) générant le signal de commande ce dernier circuit comportant un circuit (16) générant un signal de référence, adapté pour générer un premier ou un second type de signal en vue de faire tourner le moteur à une vitesse comprise entre une première et une seconde gamme acceptable et des moyens de commande (40, 42) pour l'ajustement continu desdits premier et second types de signal de référence afin d'obtenir une commande continue de la vitesse du moteur à l'intérieur de chacune des première et seconde gammes acceptables caractérisé en ce que sont prévus des moyens uniquement manuels (60) pilotant lesdits moyens de commande (40, 42) pour réguler à la fois les première et seconde vitesses par l'intermédiaire d'une unique opération afin d'obtenir un rapport fixe et prédéterminé entre à la fois les première et seconde vitesses, durant l'exécution d'un programme unique de lavage sur toute l'étendue de la gamme d'ajustement continu des moyens de commande.

2. Un dispositif selon la revendication 1, caractérisé en ce que le circuit générant un signal de référence (16) est propre à générer des tensions de référence et en ce que les moyens de commande (40, 42) servent à modifier lesdites tensions de référence pour générer une tension de commande qui, lorsqu'elle est appliquée audit élément de régulation, influe sur la proportion de la durée de chaque cycle de la tension d'alimentation durant laquelle le courant est appliqué au moteur de manière à influer sur la vitesse de rotation dudit moteur.

3. Un dispositif selon la revendication 1 ou 2, caractérisé en ce que lesdits moyens de commande comprennent deux résistances variables jumelées (40, 42) pour produire des variations de résistance au moyen (60) d'une unique opération de commande.

4. Un dispositif selon la revendication 3, caractérisé en ce que lesdites deux résistances variables (40, 42) ont la même valeur maximale de résistance.

5. Un dispositif selon la revendication 3, caractérisé en ce que lesdites résistances variables (40, 42) sont toutes les deux iogarithmiques.

6. Un dispositif selon la revendication 2, caractérisè en ce que ledit circuit génèrant des tensions de référence (16) inclut une source de tension ($-V_{dc}$) qui est appliquée à la sortie (37) dudit circuit génèrant des tensions de référence via au moins une résistance variable (40).

7. Un dispositif selon la revendication 6, caractérisé en ce que, entre sa sortie (37) et ladite source de tension ($-V_{dc}$), ledit circuit génèrant des tensions de référence inclut une résistance variable supplémentaire (42) connectée à travers un interrupteur (43) lors du passage de régime de ladite première vitesse à ladite seconde vitesse.

8. Un dispositif selon la revendication 7, caractérisé en ce que la résistance variable (40) et la résistance supplémentaire (42) sont constituées par deux résistances variables jumelées ayant des coulisseaux mécaniquement couplés.

9. Un dispositif selon l'une quelconque des revendications précédentes, caractérisè en ce que ledit circuit génèrant des tensions de référence inclut des moyens de retard (35, 36, 53, 50) pour empêcher le moteur de subir des changements brusques de vitesse lors de la commutation de l'un des régimes de fonctionnement vers l'autre.

**Patentansprüche**

1. Vorrichtung zum Steuern der Geschwindigkeit eines Waschmaschinenmotors während der Ausführung eines einzelnen Waschprogramms mit einem Regelelement (3) zum Regeln der Motordrehzahl in Abhängigkeit von einem Steuersignal, einer Schaltung (16, 21) zur Erzeugung des Steuersignals, die eine Bezugssignalgeneratorschaltung (16) enthält, die zum Betreiben des Motors mit einer innerhalb eines annehmbaren ersten oder zweiten Bereichs liegenden Drehzahl einen ersten oder einen zweiten Signaltyp erzeugt, und einer Steuervorrichtung (40, 42) zum kontinuierlichen Einstellen des ersten und des zweiten Bezugssignaltyps, damit eine kontinuierliche Steuerung der Motordrehzahl innerhalb des ersten und des zweiten annehmbaren Bereichs vorgesehen wird, dadurch gekennzeichnet, daß ein einziges, von Hand betätigbares Mittel (60) zum Steuern der Steuervorrichtung (40, 42) vorgesehen ist, das sowohl die erste als auch die zweite Drehzahl mit Hilfe eines einzigen Vorgangs regelt, damit während der Ausführung eines einzelnen Waschprogramms ein festes und vorbestimmtes Verhältnis zwischen der ersten und der zweiten Drehzahl im gesamten Bereich der kontinuierlichen Einstellung der Steuervorrichtung erhalten wird.

2. Vorrichtung nach Anspruch 1, dadurch gekennzeichnet, daß die Bezugssignalgeneratorschaltung (16) so betätigt wird, daß sie Bezugsspannungen erzeugt, und daß die Steuervorrichtung (40, 42) dazu dient, die Bezugsspannungen zur Erzeugung einer Steuerspannung zu verändern, die beim Anlegen an das Regelelement den Anteil der Zeit während jedes Versorgungsspannungszyklus beeinflußt, in dessen Verlauf dem Motor Strom zugeführt wird, so daß die Laufdrehzahl des Motors beeinflußt wird.

3. Vorrichtung nach Anspruch 1 oder 2, dadurch gekennzeichnet, daß die Steuervorrichtung zwei gekoppelte variable Widerstände (40, 42) enthält, die mittels eines einzigen Steuervorgangs zwei Widerstandsänderungen erzeugen.

4. Vorrichtung nach Anspruch 3, dadurch gekennzeichnet, daß die variablen Widerstände (40, 42) den gleichen maximalen Widerstandsnennwert haben.

5. Vorrichtung nach Anspruch 3, dadurch gekennzeichnet, daß die beiden variablen Widerstände (40, 42) logarithmisch sind.

6. Vorrichtung nach Anspruch 2, dadurch gekennzeichnet, daß die Bezugsspannungsgeneratorschaltung (16) eine Spannungsquelle ($-V_{dc}$) enthält, die mit dem Ausgang (37) der Bezugsspannungsgeneratorschaltung über wenigstens einen variablen Widerstand (40) verbunden ist.

7. Vorrichtung nach Anspruch 6, dadurch gekennzeichnet, daß die Bezugsspannungsgeneratorschaltung zwischen ihrem Ausgang (37) und der Spannungsquells ($-V_{dc}$) einen weiteren variablen Widerstand (42) enthält, der mittels eines Schalters (43) angeschlossen ist, wenn ein Übergang vom Betrieb mit der ersten Drehzahl zu einem Betrieb mit der zweiten Drehzahl erfolgt.

8. Vorrichtung nach Anspruch 7, dadurch gekennzeichnet, daß der variable Widerstand (40) und der weitere variable Widerstand (42) von zwei gekuppelten variablen Widerständen gebildet sind, die mechanisch miteinander verbundene Schleifarme aufweisen.

9. Vorrichtung nach einem der vorhergehenden Ansprüche, dadurch gekennzeichnet, daß die Bezugsspannungsgeneratorschaltung Verzögerungsmittel (35, 36, 53, 50) enthält, die verhindern, daß der Motor scharfe Drehzahländerungen ausführt, wenn ein Umschalten von einem Betriebszustand zu einem anderen erfolgt.

FIG.I.

FIG.2.